# EUROPÄISCHE PATENTANMELDUNG

(11) **EP 2 546 513 A2**
(43) Veröffentlichungstag der Anmeldung: **16.01.2013**
(21) Anmeldenummer: 12175942.7
(22) Anmeldetag: 11.07.2012
(51) Int. Cl.: F03D 1/06

(54) **Windkraftanlage und Turbinenlaufrad hierfür**

(30) Priorität: 11.07.2011 DE 102011107071
(71) Anmelder: Putz, Elmar Ph., 94469 Deggendorf (DE)
(72) Erfinder: Putz, Elmar Ph., 94469 Deggendorf (DE)
(74) Vertreter: Benninger, Johannes

(57) **Zusammenfassung**

Es ist eine Windkraftanlage (30) zur Wandlung von durch Luft transportierter Strömungsenergie in rotatorische mechanische und/oder elektrische Energie offenbart, die wenigstens ein im Wesentlichen axial angeströmtes und die Luft (12) in annähernd radialer Richtung verlassendes Turbinenrad (15) umfasst, das einen drehbar gelagerten scheibenförmigen Träger (1) mit einer strömungslenkenden Strukturierung in Form von schräg und/oder gekrümmt verlaufenden Stegen (2) und/oder Kanälen aufweist, wobei die Stege (2) bzw. Kanäle jeweils über ihren Längsverlauf variable bzw. sich verändernde Querschnitte aufweisen.

## Beschreibung

Die vorliegende Erfindung betrifft eine Windkraftanlage mit den Merkmalen des unabhängigen Anspruchs 1.

Zur Gewinnung von elektrischer Energie aus der Wandlung von Strömungsenergie, insbesondere von Windenergie dienen sog. Windenergieanlagen, die in unterschiedlichsten Ausführungsvarianten bekannt geworden sind. Die bekannteste und für Großanlagen fast ausschließlich eingesetzte Ausführungsvariante sind auf Masten stehende, axial angeströmte und durchströmte Rotoren mit zwei oder drei Rotorblättern, deren Rotor entweder direkt oder über ein Untersetzungsgetriebe mit einem elektrischen Generator zusammenwirkt. Die Durchmesser dieser Rotoren können bei sog. Großanlagen bis zu 90 Metern oder auch mehr betragen. Daneben gibt es zahlreiche kleinere Anlagen mit geringerer Leistung, die vorwiegend für die dezentrale Energieversorgung und/oder zur Ergänzung anderer Energieträger eingesetzt werden.

Neben zahlreichen anderen Bauformen wurden in der Vergangenheit verschiedene Ausführungsvarianten von Radial-Turbinen eingesetzt. So offenbart die DE 34 18 946 A1 eine sog. Reaktions-Radial-Turbine, die axial angeströmt wird und den Medien- oder Luftstrom um 90 Grad sternförmig auf gekrümmte Leitflächen umlenkt, wodurch eine Rotordrehung bewirkt wird. Der Medien- oder Luftstrom wird dabei von der axialen Zuflussrichtung auf eine radiale Abflussrichtung umgelenkt.

Eine ähnliche Turbine zum Einsatz in Fahrzeugen, um während der Fahrt Energie zu gewinnen, ist aus der DE 20 2009 013 425 U1 bekannt. Ein zusätzlicher Zulauftrichter soll durch Lenkung der Zuflussströmung die Anströmung der Turbine verbessern.

Die DE 10 2005 049 794 A1 offenbart einen Propeller mit Leitstrukturen an den Oberflächen seiner Propellerblätter, die für eine verbesserte axiale Umlenkung des anströmenden Mediums an die Oberflächen der Propellerblätter und für eine verbesserte axiale Ableitung hinter dem Propellerblatt sorgen sollen. Außerdem sollen die hinter dem Propellerbereich auftretenden Verwirbelungen reduziert werden. Die Leitstrukturen weisen bogenartige Krümmung auf und erstrecken sich in Umlaufrichtung des Propellers.

Eine kompakte Windkraftanlage, die besonders für private Nutzer geeignet sein soll, wird in der DE 10 2008 025 719 A1 vorgeschlagen. Ein axial einströmender Luftstrom trifft auf eine Antriebsscheibe mit um die Drehachse herum angeordneten und senkrecht von der Antriebsscheibe aufragenden Lamellen, so dass der Luftstrom unter Vortrieb der Antriebsscheibe radial abgeleitet wird. Die Antriebsscheibe ist in einem Gehäuse mit einem axialen Einlass und einem radialen Auslass aufgenommen.

Die DE 10 2008 046 209 A1 offenbart schließlich ein Turbinenlaufrad für gasförmige Medien, insbesondere für einen Windstrom, der axial zentriert dem Laufrad zugeführt wird, wo er im Bereich des Laufradbodens umgelenkt wird und danach das Schaufelgitter von innen nach außen durchströmt. Das Turbinenlaufrad ist mit einem Generator verbunden, der zur Stromerzeugung dient.

Ein Ziel der Erfindung besteht darin, ein Laufrad für eine Windkraftanlage zur Verfügung zu stellen, das axial angeströmt wird und die Luft unter rotatorischem Antrieb des Laufrades radial umlenkt, das durch eine verbesserte Gestaltung der Schaufelräder und/oder Leitflächen gegenüber bekannten einen verbesserten Wirkungsgrad aufweist.

Dieses Ziel der Erfindung wird mit den Gegenständen der unabhängigen Ansprüche erreicht. Weitere vorteilhafte Ausgestaltungen werden durch die Unteransprüche beschrieben. So schlägt die Erfindung zur Erreichung des genannten Ziels eine Windkraftanlage zur Wandlung von durch Luft transportierter Strömungsenergie in rotatorische mechanische und/oder elektrische Energie vor, die wenigstens ein im Wesentlichen axial angeströmtes und die Luft in annähernd radialer Richtung verlassendes Turbinenlaufrad umfasst. Dieses Turbinenlaufrad weist einen drehbar gelagerten scheibenförmigen Träger mit einer strömungslenkenden Strukturierung in Form von schräg und/oder gekrümmt verlaufenden Stegen und/oder Kanälen auf. Es ist vorgesehen, dass die Stege bzw. Kanäle jeweils über ihren Längsverlauf variable bzw. sich verändernde Querschnitte aufweisen. Die veränderlichen Querschnitte der Stege, Kanäle oder die Luft leitenden Profilierungen im Turbinenlaufrad können insbesondere einem Tragflächenprofil ähneln und eine in Strömungsrichtung zunächst zunehmende und danach abnehmende Stärke bzw. Dicke des Querschnittes aufweisen. Im vorliegenden Zusammenhang werden die Stege, die der Übertragung der Strömungsenergie des durch das Laufrad strömenden Fluides - des Windes, Wassers o. dgl. - teilweise auch als Gleitflügel bezeichnet. Die Begriffe "Stege", "Flügel", "Gleitflügel" etc. sind daher normalerweise als Synonyme zu betrachten.

Es sei in diesem Zusammenhang darauf hingewiesen, dass die gesamte Beschreibung zwar vorrangig von Windkraftanlagen und von einer Energiewandlung von Windströmung spricht, dies aber nicht einschränkend zu verstehen ist. Wann immer von einer Windkraftanlage oder von einem Turbinenlaufrad gesprochen wird, die von Luft oder einem gasförmigen Fluid angeströmt werden, so sind die Prinzipien ebenso auf flüssige Fluide und Wasserströmungen übertragbar. Der Begriff "Windkraftanlage" oder "Windturbine" ist deshalb umfassend dahingehend zu verstehen, dass damit ebenso Wasserkraftanlagen oder Wasserturbinen gemeint sein können, die nach demselben Prinzip der Strömungsumlenkung aus axialer Anströmung in radiale Abströmung funktionieren.

Bei einer bevorzugten Variante der Windkraftanlage weist das Turbinenrad bzw. Turbinenlaufrad der erfindungsgemäßen Windkraftanlage eine Mehrzahl von annähernd gleichmäßig über den äußeren Bereich der stirnseitigen Oberfläche verteilten Stegen - auch als Gleitflächen oder Gleitflügel bezeichnet - auf, deren Oberflächen jeweils einen gekrümmten Verlauf aufweisen, deren Krümmung insbesondere dem vorgegebenen Kurvenverlauf einer Coriolisbeschleunigung entsprechen kann. Damit wird eine Art der Energiegewinnung aus der Strömungsenergie von Luft, Gasen und Fluiden mittels wenigstens eines Turbinenlaufrades zur Verfügung gestellt, das dem Prinzip der Coriolisbeschleunigung folgt oder zumindest ähnelt. Auf diese Weise können äußerst kompakte Windenergie- oder Wasserenergieanlagen zur Verfügung gestellt werden, die eine hohe Effektivität und eine hohe Energiedichte aufweisen. D.h., gemessen an der Größe der Windkraftanlage bzw. des Turbinenlaufrades kann damit eine hohe Energiemenge zur Verfügung gestellt werden. Die Bauart und Geometrie ermöglicht dabei einen Platz sparenden Einsatz, der bei vielen herkömmlichen Windkraftanlagen mit Propellerantrieben in dieser Form aus Platzgründen nicht möglich ist.

Die bisher gebräuchlichen, meist nach dem Schraubenprinzip funktionierenden Repeller weisen im Wind nach Betz einen theoretischen Wirkungsgrad von 0,593 auf, der durch die Schrägstellung der Flügel und einem dem Flugzeugflügel ähnlichen Querprofil erzeugt wird, und der eine Ablenkung der Luft von unter 45 Grad beim Durchströmen bewirkt. Bei fast allen Turbinen, die nach Betz beurteilt werden können, ist die Eigenschaft des Durchströmens vorherrschend, welche zugleich voraussetzt, dass unmittelbar vor und hinter der Turbine der Raum frei sein muss, um die Funktionsfähigkeit zu gewährleisten. Bei Turbinen nach der Coriolisbeschleunigung wird der Luft - oder Wasserstrom vollständig rechtwinkelig abgelenkt und es besteht kein Raumbedarf für Luft an der Leeseite. Die sich daraus ergebenden Möglichkeiten können somit nicht nach den Betz'schen Regeln beurteilt werden.

Die Eigenschaften von Turbinen, die nach dem Coriolisprinzip arbeiten, bestehen dagegen im Wesentlichen darin, dass bei einer Zylinderturbine der frontale Windwiderstand annähernd gleich dem einer starren Wand mit annähernd gleich großer Fläche ist. Der Windwiderstand bleibt auch ungefähr gleich, unabhängig davon, ob sich die Zylinderturbine dreht oder nicht und unabhängig von ihrer Umdrehungsgeschwindigkeit. Nur im Falle einer Montage auf einem fahrenden oder schwimmenden Fahrzeug ändert sich der Druck auf die Turbine durch den Betrag der Geschwindigkeit des entsprechenden Fahrzeugs. Damit sind einerseits gewisse Segeleigenschaften angesprochen, denn die an der Unterseite nach der Corioliskurve und an der darüber liegenden stärker gekrümmten Oberseite, ähnlich dem Profil eines Flugzeugflügels, geformten Gleitflügel fangen den Wind gleichsam wie kreisförmig angeordnete Segel auf und bewirken die Drehung der Zylinderturbine. Andererseits gelten die Segeleigenschaften auch deshalb, weil ein mit einer Zylinderturbine bestücktes leichtes Fahrzeug bei entsprechender Untersetzung alleine mit der in der bewegten Luft enthaltenen Energie gegen den Wind fahren kann. In einem weiteren Schritt wird die Möglichkeit einer Rückgewinnung von Antriebsenergie bei verschiedenen Fahrzeugen als Einsparmöglichkeit von Energie genutzt. Das von einem Motorfahrzeug verdrängte Medium gibt seine durch die Fahrt entstandene Bewegungsenergie fast ausschließlich an die Umgebung (z.B. Winddruck und bewegte Pflanzen am Straßenrand) ab. Der Fahrtwind stellt aber eine vom Fahrzeug selbst verursachte Energieform dar, die man durch einen günstigen CW-Wert zu vermindern sucht, stellt aber zugleich ein Potential zur Rückgewinnung dar, das wenigstens teilweise nutzbar ist.

Das Turbinenrad der erfindungsgemäßen Windkraftanlage kann wahlweise eine Mehrzahl von annähernd gleichmäßig über den äußeren Bereich der stirnseitigen Oberfläche verteilten Stegen, Gleitflächen oder -flügeln aufweisen, deren Querschnitt jeweils eine Profilierung aufweist, wobei die Oberflächen jeweils einen gekrümmten Verlauf mit unterschiedlicher Krümmung aufweisen. Grundsätzlich müssen nicht alle Stege eine identische Profilierung aufweisen, sondern können ggf. auch unterschiedlich gestaltet sein. So sind bspw. Ausführungsvarianten denkbar, bei denen nur jeder zweite Steg oder Gleitflügel eine entsprechende Profilierung aufweist, während jeder zweite Steg einen konstanten Querschnitt aufweist. Wie erwähnt, folgt die Gesamtkrümmung der Stege vorzugsweise jeweils in etwa dem Verlauf der Coriolisbeschleunigung. Da jeder Steg an seiner konvexen Außenseite eine stärkere Krümmung aufweist als an seiner konkaven Innenseite, ergibt sich eine zu den seitlichen Enden jedes Steges jeweils gegenüber dem Mittelbereich abnehmende Dicke, was den Stegen einen Querschnitt verleiht, der den Querschnitten von Flugzeugflügeln o. dgl. ähnelt. Wahlweise können die Stege des Turbinenrades jeweils hypoidförmige oder hypoidähnliche Verläufe aufweisen. Das Charakteristikum dieser Verläufe besteht darin, dass die Stege, die sich jeweils von einem kleineren Radius des Turbinenrades bis zu dessen Außenradius erstrecken, jeweils eine gleichmäßige oder nach außen hin abnehmende Krümmung aufweisen, die ungefähr einen hypoidförmigen Verlauf aufweist, so dass das Turbinenrad in einer Draufsicht einem Zahnrad mit hypiodförmiger Stirnverzahnung ähnelt.

Weiterhin können die Stege des erfindungsgemäßen Turbinenlaufrades an ihren dem scheibenförmigen Träger abgewandten Stirnseiten einen oder mehrere Abweiser in Gestalt einer ringförmigen Scheibe, einzelner repellerartiger Abweiser, strömungsleitender Scheiben o. dgl. aufweisen. Darüber hinaus kann dem Turbinenrad an seinem Strömungseingang eine strömungslenkende Scheibe, ein sich verjüngender oder erweiternder Trichter o. dgl. zugeordnet sein.

Eine vorteilhafte Ausführungsvariante der erfindungsgemäßen Windkraftanlage kann vorsehen, dass dem Turbinenrad ein strömungslenkender Kanal zugeordnet ist, der einen abschnittweise gekrümmten Verlauf aufweist. So kann der Kanal bspw. einen im Wesentlichen horizontalen Lufteinlass und einen im Wesentlichen vertikalen Luftauslass aufweisen, der am Strömungseingang des horizontal angeordneten und um eine im Wesentlichen vertikal angeordnete Achse rotierenden Turbinenrades mündet. Vorzugsweise ist dieser Kanal im Querschnitt auf den Durchmesser des Turbinenrades abgestimmt und weist ggf. eine Leiteinrichtung zur Drehung gegen die Windrichtung auf, so dass die Kanalmündung immer in den Wind gerichtet bleiben kann.

Eine weitere Variante der Windkraftanlage kann vorsehen, dass das horizontal auf einem Gebäude angeordnete und um eine im Wesentlichen vertikal angeordnete Achse rotierende Turbinenrad von unten angeströmt ist, wobei Luftkanäle warme Abluft des Gebäudes zum Turbinenrad leiten.

Eine mobile Windkraftanlage kann vorsehen, dass wenigstens ein im Wesentlichen vertikal angeordnetes und um eine im Wesentlichen horizontal angeordnete Achse rotierendes Turbinenrad an einem Land-, Wasser- oder Luftfahrzeug montiert und vom Fahrtwind und/oder von Luftströmungen angeströmt ist.

Wie oben erwähnt, umfasst die Erfindung nicht nur die Windkraftanlage selbst, sondern auch das rotierende, von Luft in axialer Richtung angeströmte Turbinenrad oder Turbinenlaufrad einer solchen Windkraftanlage gemäß einer der zuvor beschriebenen Ausführungsvarianten. Zudem umfasst die Erfindung auch ein solches Turbinenrad, das gemäß einer der zuvor beschriebenen Ausführungsvarianten aufgebaut ist und von Wasser angeströmt ist, um die kinetische Energie des Wassers in mechanische Rotationsenergie und/oder in elektrische Energie zu wandeln.

Nachfolgend werden nochmals einige Aspekte und weitere Varianten der vorliegenden Erfindung beschrieben. So betrifft die vorliegende Erfindung nicht nur eine Wind- oder Wasserkraftanlage und das für die Energiewandlung erforderliche Turbinenrad, sondern auch ein Verfahren zur Energiegewinnung aus bewegten Flüssigkeiten und Gasen mit Turbinen nach dem Prinzip der Coriolisbeschleunigung, das dadurch gekennzeichnet, ist, dass die strömenden Flüssigkeiten oder Gase axial auf einen runden und scheibenförmigen Träger treffen, auf dem, durch stegartige Erhöhungen, genannt Gleitflügel, oder rillenartige Vertiefungen, genannt Gleitkanäle, die durch die Corioliskraft entstehende Kurve vorgegeben ist, so dass das jeweilige Medium in der Summe radial und rechtwinkelig nach außen drängt und dadurch den Träger tangential in der durch die Kurve bestimmten Richtung beschleunigt. Dieses genannte Prinzip beruht auf einer drehenden Scheibe, auf der ein Körper eine nach außen gerichtete Zentrifugalkraft erfährt. Dabei wird die von der Corioliskraft beschriebene Kurve vorgegeben, die beim axialen Auftreffen eines Mediums ihrerseits die Scheibe in Drehung versetzt.

Das Verfahren zur Energiegewinnung bzw. Energiewandlung verwendet eine sog. Zylinder-Turbine mit Gleitflügelprofilen, die die Corioliskraft mit dem Bernoulli-Effekt kombinieren. Diese Turbine wird axial angeströmt, wobei die Anströmung auf einen winddichten Träger erfolgt, auf dem sich axial angebrachte Gleitflügel mit einem dem Flugzeugflügel ähnlichen Querprofil befinden, die an der Unterseite nach der Kurve der Coriolisbeschleunigung gekrümmt sind und an der darüber liegenden Oberseite stärker gekrümmt wird. Die in der Drehrichtung vorne liegende Profilseite ist, abweichend vom Flugzeugflügelprofil, als eine den Luftstrom trennende Kante ausgebildet, die in der Summe den Luftstrom rechtwinkelig ablenkt und so auf den Träger um die Drehachse eine Drehung verursachen. Die vorgegebene Kurve, die ungefähr dem Verlauf einer Coriolisbeschleunigung entspricht, bewirkt an der Unterseite der Gleitflügel deren Drehung und Ablenkung und damit eine Drehung des Trägers. Das Querprofil mit der an der Oberseite stärkeren Krümmung verstärkt nach dem Bernoulli-Effekt den Auftrieb und liefert somit eine Drehbeschleunigung der Scheibe des Turbinenrades.

An der Zylinder-Turbine können im Bereich der Auftriebszone die Räume zwischen den Gleitflügeln mit Windabweisern gegen die axial auftreffende Anströmung derart abgeschirmt sein, dass der zwischen den Gleitflügeln austretende Luftstrom nicht beeinflusst wird und zugleich, durch die Schrägstellung der Windabweiser in der Drehrichtung, die Zylinder-Turbine einen zusätzlichen Drehimpuls erfährt. Diese Variante der Zylinderturbine sieht vor, dass auch die Auftriebszone durch Windabweiser zur Optimierung des Systems beitragen kann, indem die Abweiser repellerartig ausgebildet und angebracht sein können und gleichzeitig störende Turbulenzen in den Räumen zwischen den Gleitflügeln abschirmen können.

Weiterhin kann die Umgebung der Zylinder-Turbine einschließlich der Auftriebszone von einer Gebäudewand oder anderen Bauteilen abgedeckt sein, wobei sich darin eine Öffnung befinden kann, die genau vor dem Innendurchmesser liegt. Diese Möglichkeit sieht einen Einbau der Turbine in Gebäudewänden oder anderen festen Wandflächen oder Gebäudefassaden oder in sonstigen geeigneten Flächen oder Stellen vor. Die Wand kann die Auftriebszone abschirmen, trägt jedoch insgesamt kaum zur Optimierung bei.

Bei einer weiteren Ausführungsvariante der Vorrichtung kann die Zylinder-Turbine mit ihrer Achse senkrecht zur Windrichtung aufgestellt sein, wobei sich über der Öffnung ein kreisförmig drehbarer Windfang befinden kann, der mit seiner Windfahne selbständig seine Öffnung in den Wind dreht und ihn dabei in die Zylinder-Turbine umlenkt. Ein solches drehbares windfangartiges Rohr kann bspw. auch horizontal, also mit senkrechter Drehachse, z.B. auf Dächern von Gebäuden oder auf anderen geeigneten Flächen betrieben werden.

Wahlweise kann die Zylinder-Turbine mit ihrer Achse senkrecht mit ihrer Öffnung zur Erde aufgestellt werden, um einen erwärmten Luftstrom, der aus verschiedenen Ursachen entsteht und mit Folien oder Dächern abgegrenzt wird, in die Öffnung zu leiten. Damit ist eine Möglichkeit gegeben, an der höchsten Stelle eines Treibhauses oder eines anderen warme Abluft erzeugenden Gebäudes ein Turbinenlaufrad anzubringen, ohne dass Verluste durch Umsetzung von Wärme in Bewegungsenergie in einem Kamin entstehen.

Eine weitere Möglichkeit besteht darin, eine Doppel-Zylinder-Turbine zu bilden, bei der zwei gleiche oder unterschiedliche - d.h. insbesondere gleich oder unterschiedlich dimensioniere - Zylinder-Turbinen, die gegensätzliche Drehrichtungen aufweisen, zu kombinieren, indem sie mit ihren Öffnungen entgegengesetzt mit jeweils einem Freilauf fest verbunden sind, der drehfest entgegen der Drehrichtung auf einer Welle sitzt und nur eine Drehrichtung der Welle zulässt, so dass bei oszillierenden Strömungen die Luvseite die Leeseite nicht mitschleppt. Bei dieser Variante werden zwei Laufräder in einer Weise kombiniert, dass sie mit ihren Trägern aneinander grenzen oder auch voneinander beabstandet in fluchtender Anordnung mit einer gemeinsamen Welle gekoppelt sind, so dass ihre Öffnungen gegenüber liegen bzw. voneinander abgewandt sind. Diese Kombination ermöglicht es, oszillierende oder ungleichmäßige oder wechselnde Strömungen aus verschiedenen Richtungen in eine gleiche Drehung auf eine Welle zu übertragen. Zur Optimierung kann ein Freilauf auf der Welle eingebaut werden, so dass eine feste Drehrichtung gegeben ist, auch wenn einer der Rotoren in eine entgegengesetzte Richtung dreht.

Eine von den zuvor beschriebenen Varianten und Gestaltungen deutlich abweichende Ausführungsvariante des Turbinenrades kann einen sog. Coriolis-DoppelKegel vorsehen, der vorwiegend zur Wandlung von Strömungsenergie des Wassers geeignet ist. Hierbei sind in die Mantelfläche von zwei gleich großen Kegelstümpfen, die mit einer gemeinsamen Grundfläche fest verbunden sind, rillenartige Vertiefungen, im Querschnitt gleiche Gleitkanäle, eingebracht, die der Kurve der Coriolisbeschleunigung folgen, wobei spiegelbildlich auf dem gegenüber liegenden Kegelstumpf die gleichen Gleitkanäle komplementär eingebracht sind, mit dem Zweck, bei oszillierenden Strömungen und Wellen eine gleichartige Drehung zu erzielen. Eine solche Coriolisturbine auf der Grundlage von zwei mit ihren Grundflächen verbundenen Kegelstümpfen, auf deren Mantelflächen im Querschnitt gleich bleibende Kanäle eingebracht sind, wobei die jeweils gegenüber liegenden Kanäle entgegengesetzten oder spiegelbildlichen Kurven folgen, dient vorzugsweise der Wandlung von Strömungsenergie fließenden Wassers in rotatorische Bewegungsenergie bzw. in mechanische Energie, die ggf. in elektrische Energie gewandelt werden kann. Bei axial fester Positionierung mit senkrechter Achse zum Wasserspiegel erzeugt der Doppelkegel sowohl bei aufschwingender wie auch bei abschwingender Wasserwelle eine gleichsinnige Drehung. Der Coriolis-Doppelkegel kann auch mit horizontaler Achse in einem Brandungsbereich in Ufernähe mit auflaufender Wasserwelle und dem zurückfliegenden Wasser jeweils in gleichsinnige Drehung versetzt werden.

Weiterhin kann das Turbinenrad auch als sog. Coriolis-Schaufel-Turbine ausgebildet sein, die sich ebenfalls vorwiegend für Wasser als strömendes Medium eignet, dessen Energie in rotatorische Bewegungsenergie gewandelt wird. Bei einem solchen Turbinenrad sind Gleitflächen vorhanden, die mit dem Träger rechtwinkelig fest verbunden sind und die jeweils den Corioliskurven folgen. Die Gleitflächen, welche die Drehrichtung bestimmen, sind parallel zur Drehachse angeordnet und sind bis nahe an die Welle gezogen, um die Zulauföffnung möglichst auf den Durchmesser der Welle zu vermindern, wobei die axiale Höhe der Gleitflächen vom Zentrum zur Peripherie abnehmen oder zunehmen kann. Eine solche Coriolis-Schaufel-Turbine mit gekrümmten Gleitflächen eignet sich besonders zum Einsatz in langsam fließenden Gewässern, wobei gleichzeitig ein örtlich begrenzter Stau erzeugt wird, der zum Antrieb des Turbinenrades genutzt wird.

Nahezu alle der zuvor beschriebenen Ausführungsvarianten der Turbinen eignen sich auch zur Kombination miteinander, wobei die jeweiligen Turbinen einzeln, doppelt mit Freilauf, oder doppelt mit fester Verbindung betrieben werden können.

Die Erfindung ermöglicht darüber hinaus auch die Rückgewinnung von Antriebsenergie aus von Fahrzeugen verursachtem Fahrtwind mit Turbinen gemäß einer der zuvor beschriebenen Varianten. Hierbei können auf Fahrzeugen und/oder Schiffen die beanspruchten Turbinen an Stellen angebracht werden, die ohnehin hohem Winddruck ausgesetzt sind, um den durch die Fahrt entstehenden Wind energetisch teilweise zurück zu gewinnen, oder auf Schiffen durch in alle Richtungen schwenkbare Turbinen den Wind energetisch zu nutzen und die winddichte Trägerfläche bei bestimmten Verhältnissen wie ein Segel zu benutzen. Die praktische Anwendung der Energiewandlung bei sich bewegenden und/oder dem Wind ausgesetzten Fahrzeugen und Schiffen ist deshalb möglich, wie die Strömung rechtwinkelig abgelenkt wird und somit der Raum an der Leeseite des Turbinenrades dem Fahrzeug bereit gestellt wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivdarstellung einer Ausführungsvariante eines Turbinenlaufrades einer erfindungsgemäßen Windkraftanlage.
Fig. 2 zeigt einen Detaillängsschnitt eines Abschnittes des Turbinenlaufrades gemäß Fig. 1.
Fig. 3 zeigt eine schematische Perspektivdarstellung einer weiteren Ausführungsvariante des Turbinenlaufrades.
Fig. 4 zeigt eine schematische Perspektivdarstellung einer dritten Ausführungsvariante des Turbinenlaufrades.
Fig. 5 zeigt eine schematische Perspektivdarstellung eines in einer Gebäudewand integrierbaren Turbinenlaufrades.
Fig. 6 zeigt eine schematische Perspektivdarstellung einer auf einem Gebäudedach oder anderem Bauwerk bzw. auf ebenen Flächen montierbaren Windkraftanlage mit drehbarem Windleitelement.
Fig. 7 zeigt eine schematische Darstellung eines von unten angeströmten Laufrades, das auf einem Dach montierbar ist.
Fig. 8 zeigt eine Tandemanordnung mit zwei gleichartigen Turbinenlaufrädern, die mit einer gemeinsamen Welle gekoppelt sind, in schematischer Darstellung.
Fig. 9 zeigt eine schematische Darstellung einer alternativen Ausführungsvariante eines Turbinenlaufrades, das sich insbesondere als Wasserturbine eignet.
Fig. 10 zeigt eine schematische Perspektivansicht einer Wasserturbine, die sich als Langsamläufer eignet.
Fig. 11 zeigt eine schematische Darstellung eines Fahrzeuges mit frontseitig angeordnetem Turbinenlaufrad.
Fig. 12 zeigt eine schematische Darstellung eines Schiffes mit zwei deckseitig montierten Windkraftanlagen zur Energiewandlung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

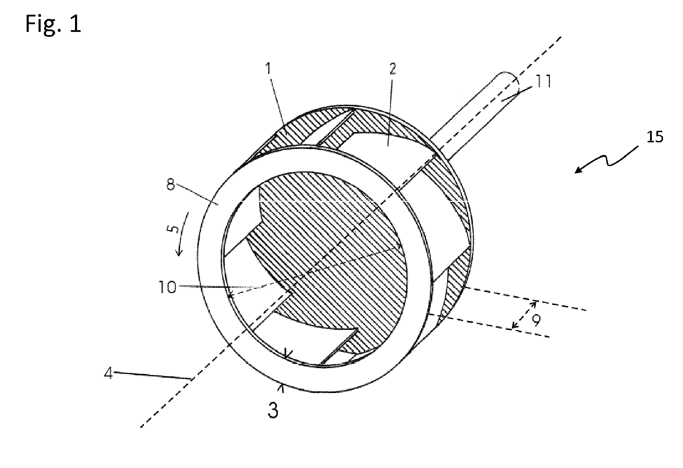

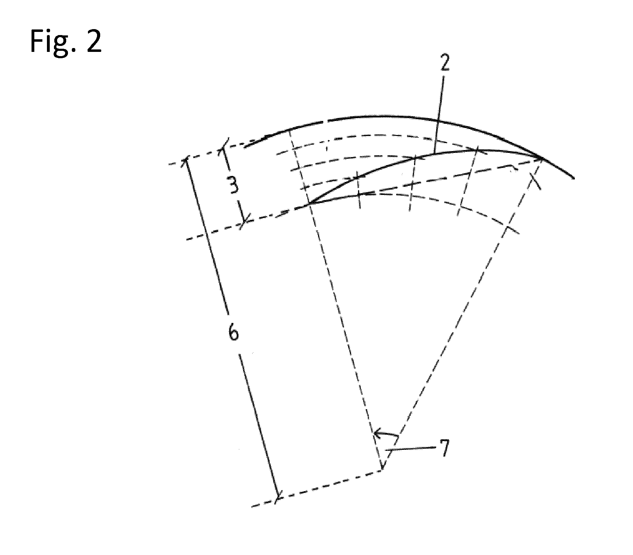

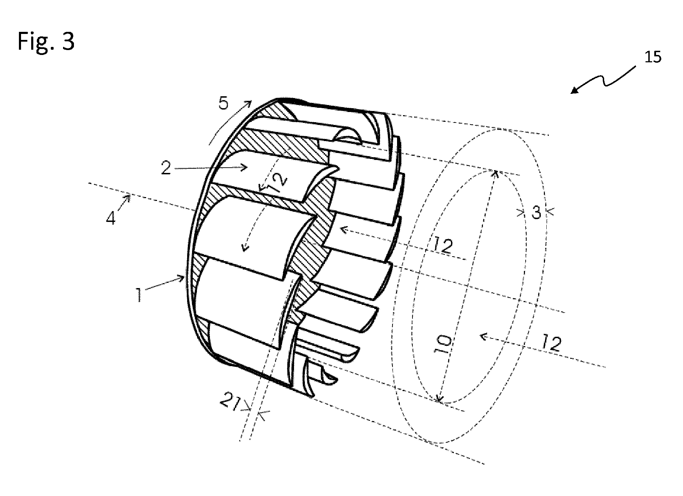

Die schematische Darstellung der Fig. 1 verdeutlicht den grundsätzlichen Aufbau und die wesentlichen Funktionen der vorliegenden Erfindung. Gezeigt ist in einer schematischen Perspektivdarstellung eine erste Ausführungsvariante eines Turbinenlaufrades 15 einer erfindungsgemäßen Windkraftanlage 30, während die Fig. 2 in einem Detaillängsschnitt einen Abschnittes des Turbinenlaufrades 15 gemäß Fig. 1 verdeutlicht. Mit einer rotierenden Welle 11, die als Abtriebswelle der Windkraftanlage 30 fungiert, ist ein scheibenförmiger Träger 1 drehfest verbunden. Der Träger 1 weist eine Reihe von gleichmäßig voneinander beabstandeten und einen äußeren Rand des Trägers 1 überdeckenden Gleitflügeln 2 oder Stegen auf, die gemäß der vorliegenden Erfindung jeweils eine gleichmäßige oder ungleichmäßige Krümmung sowie über ihren Verlauf eine Profilierung (vgl. Fig. 3) aufweisen. Die Krümmung der Stege bzw. Gleitflügel 2 ist in den Figuren 1 und 2 deutlich erkennbar, nicht jedoch die Profilierung, die erst aus den Figuren 3 ff. deutlich hervorgeht. Die vom Träger 1 abgewandten stirnseitigen Kanten der Stege oder Gleitflügel 2 sind in der gezeigten Ausführungsvariante von einem Ring oder Windabweiser 8 begrenzt, der als Auftriebszone 3 fungiert. Die innere Öffnung 10 des Rings bzw. Windabweisers 8 bildet die axiale Einströmöffnung der Turbine 15, durch welche das antreibende Fluid, die Luft oder das Wasser in das Turbinenlaufrad 15 eintritt und es in eine Umdrehung in Drehrichtung 5 um die Drehachse 4 versetzt, wobei das antreibende Fluid gleichzeitig am äußeren Umfang des Laufrades 15 zwischen den Stegen oder Gleitflügeln 2 in radialer Richtung austritt. Die axiale Höhe 9, die Länge der Stege 2, der Auftriebswinkel 3 (vgl. Fig. 2) und der Durchmesser 10 der Turbine 15 bestimmen deren Leistungsvermögen. Die schematische Detailansicht der Fig. 2 verdeutlicht nochmals eine mögliche Krümmung der Stege bzw. Gleitflügel 2, die eine Länge mit einem Winkelsegment 7 aufweisen, der bspw. 20 bis 30 Grad aufweisen kann. Der Außenradius 6 der Turbine 15 definiert deren Größe, während die Auftriebszone 3 starken Einfluss auf das Leistungsvermögen hat.

Die schematische Darstellung der Fig. 3 zeigt eine weitere Ausführungsvariante des Turbinenlaufrades 15. Dort ist erkennbar, wie die vorgegebene Kurve nach der Coriolisbeschleunigung an der Unterseite der Gleitflügel 2 die Drehung 5 des Turbinenlaufrades 15 bewirkt und mit der darüber liegenden stärkeren Krümmung ein Querprofil 21 bilden, die nach dem Bernoulli-Effekt den Auftrieb verstärken und gemeinsam eine stärkere Drehung 5 erzeugen. Die Bezugsziffern 12 verdeutlichen die Austrittsrichtung der antreibenden Strömung, die zuvor in axialer Richtung durch die Öffnung 10 in die Turbine 15 eingetreten ist.

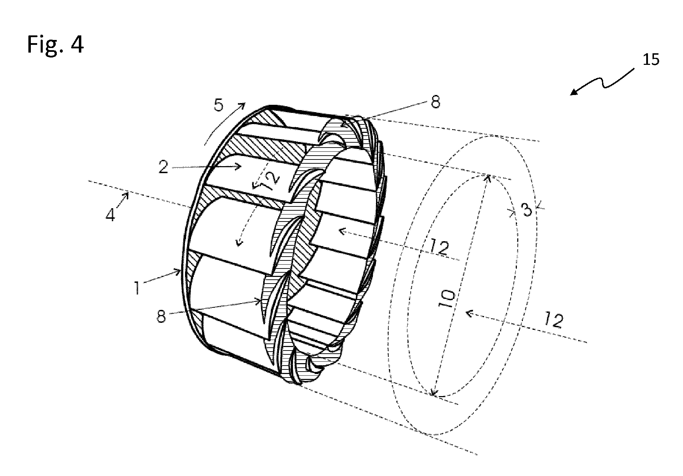

Die Fig. 4 zeigt eine schematische Perspektivdarstellung einer dritten Ausführungsvariante des Turbinenlaufrades 15. Die Auftriebszone 3 ist hierbei durch Windabweiser 8 optimiert. Diese Windabweiser 8 sind durch repellerartige Flügel an den Stirnseiten der Gleitflügel oder Stege 2 gebildet. Sie sollchen störende Turbulenzen in den Räumen zwischen den Gleitflügeln 2 reduzieren und abschirmen.

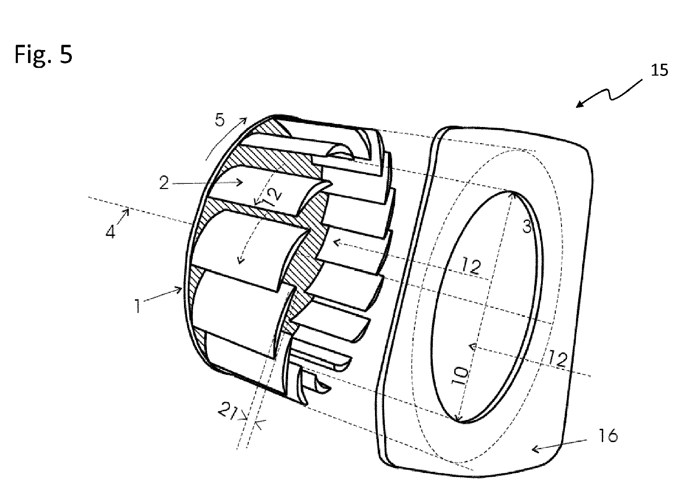

Die Fig. 5 zeigt eine schematische Perspektivdarstellung eines in einer Gebäudewand 16 integrierbaren Turbinenlaufrades 15. Das Laufrad 15 kann hierbei in einer hier nur angedeuteten Wand wie bspw. einer Haus- oder Gebäudewand eingebaut sein.

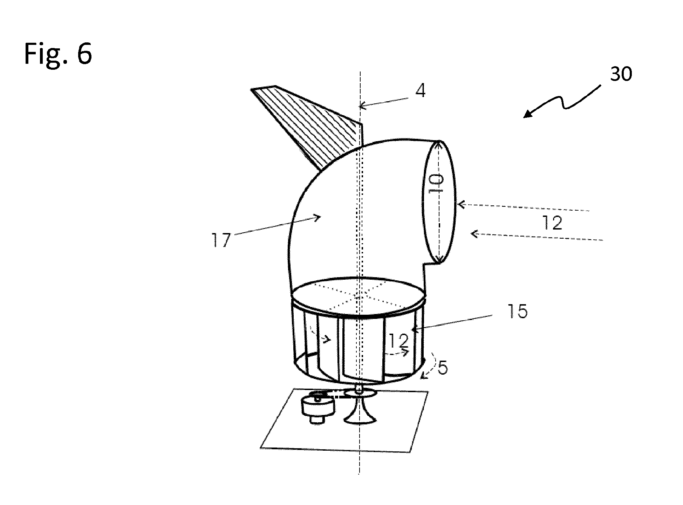

Die Fig. 6 zeigt eine schematische Perspektivdarstellung einer auf einem Gebäudedach oder anderem Bauwerk bzw. auf ebenen Flächen montierbaren Windkraftanlage 30 mit drehbarem Windleitelement 17, das als um 90° gekrümmter Rohrstutzen ausgebildet ist, dessen äußere Öffnung 10 horizontal liegt und dadurch den Wind 12 um 90° nach unten in Richtung zum horizontal liegenden und um die Drehachse 4 rotierenden Turbinenlaufrad 15 umlenken kann. Die am Windleitelement 17 angeordnete Fahne sorgt für deren Drehung in den Wind, so dass die Öffnung 10 immer gegen die Windrichtung 12 gerichtet ist.

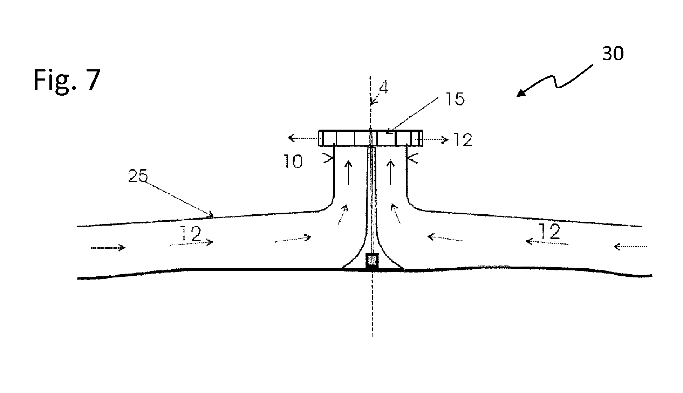

Die Fig. 7 zeigt eine schematische Darstellung eines von unten angeströmten Laufrades 15, das auf einem Dach montierbar ist, das bspw. Teil eines Treibhauses 25 oder eines anderen Gebäudes sein kann. Die warme Abluft 12 wird in horizontaler Richtung - ggf. von mehreren Seiten - zum Windkraftwerk 30 geleitet und dort nach oben umgelenkt, so dass die Luft das Laufrad 15 zur Seite hin verlassen kann.

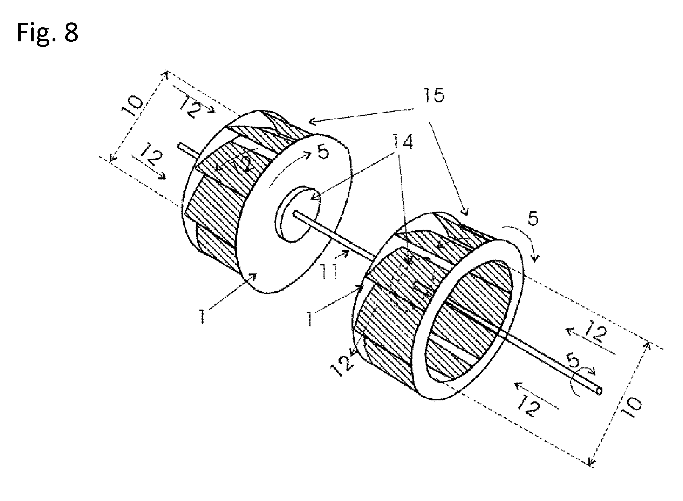

Die schematische Perspektivdarstellung der Fig. 8 zeigt eine Tandemanordnung mit zwei gleichartigen Turbinenlaufrädern 15, die mit einer gemeinsamen Welle 11 gekoppelt sind. Freiläufe 14 können dafür sorgen, dass auch bei unterschiedlicher Anströmung und unterschiedlicher Windrichtung 12 eine gleichsinnige Drehung 5 gewährleistet ist.

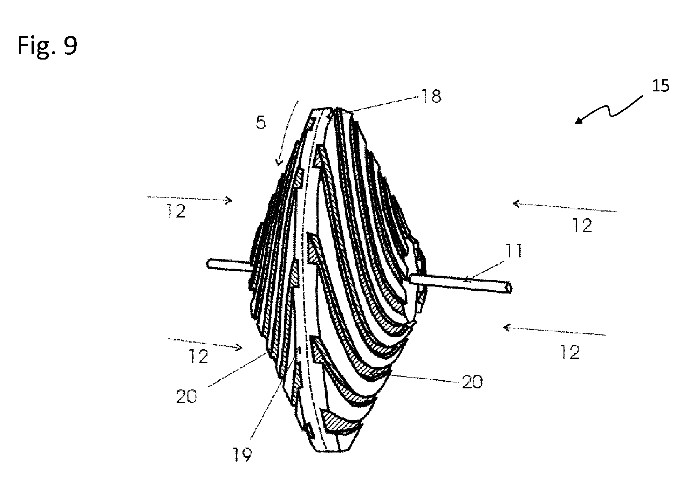

Die Fig. 9 zeigt eine schematische Darstellung einer alternativen Ausführungsvariante eines Turbinenlaufrades 15, das sich insbesondere als Wasserturbine eignet. Hierbei ist eine Coriolisturbine auf der Grundlage von zwei mit ihren Grundflächen verbundenen Kegelstümpfen 18 und 19 gebildet, in deren Mantelflächen im Querschnitt gleich bleibende Kanäle 20 eingebracht sind, wobei die jeweils gegenüber liegenden Kanäle 20 entgegengesetzte oder spiegelbildliche Verläufe aufweisen. Bei axial fester Positionierung mit senkrechter Achse 4 zum Wasserspiegel erzeugt der Doppelkegel 18, 19 sowohl bei aufschwingender wie abschwingender Wasserwelle die gleiche Drehung 5. Der Coriolis-Doppelkegel kann auch mit horizontaler Achse im Brandungsbereich mit auflaufender Wasserwelle und dem zurückfliegenden Wasser angeordnet sein.

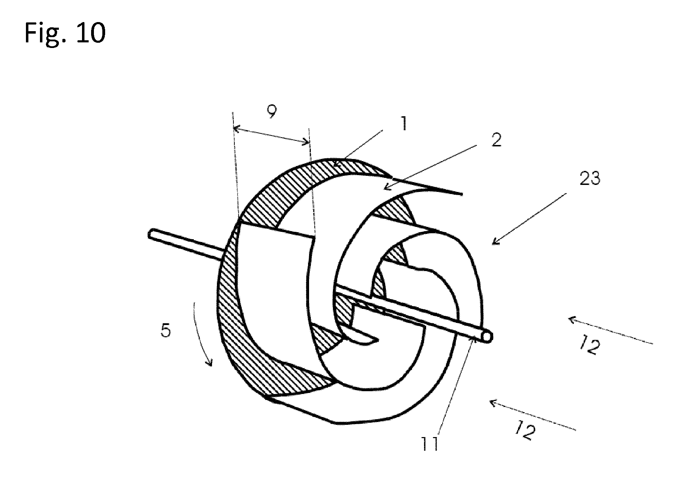

Die Fig. 10 zeigt eine schematische Perspektivansicht einer als Schaufelturbine 23 ausgebildeten Wasserturbine, die sich als sog. Langsamläufer eignet. Die relativ langen gekrümmten Flächen der Gleitflügel 2 lassen die Turbine 23 für langsame Strömungen 12 geeignet erscheinen.

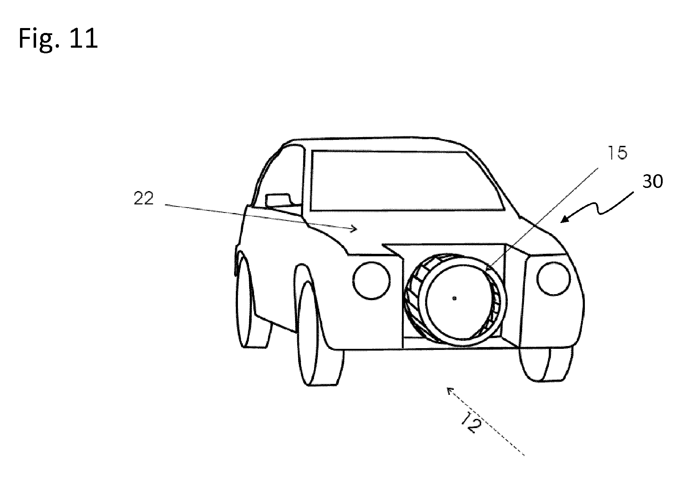

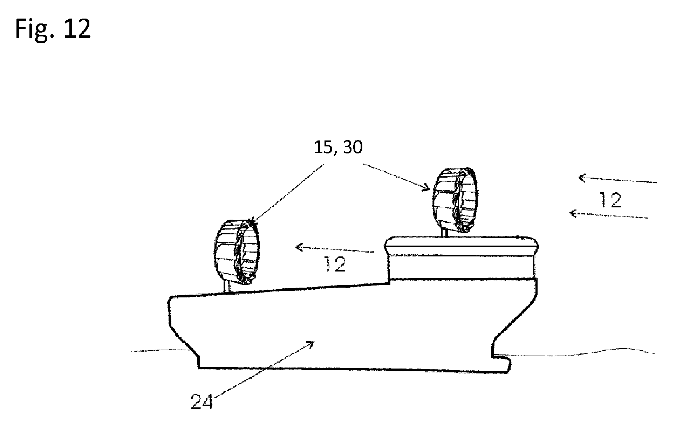

Die Fig. 11 zeigt eine schematische Darstellung eines Fahrzeuges 22 mit frontseitig angeordnetem Turbinenlaufrad 15 als möglichen Einsatzort einer erfindungsgemäßen Windkraftanlage 30. Die Fig. 12 zeigt eine schematische Darstellung eines Schiffes 24 mit zwei deckseitig montierten Windkraftanlagen 30 bzw. Turbinenlaufrädern 15 zur Energiewandlung.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Träger
- 2: Gleitflügel, Steg
- 3: Auftriebszone
- 4: Drehachse
- 5: Drehrichtung
- 6: Radius (nicht belegt)
- 7: Zentriwinkel (nicht belegt)
- 8: Windabweiser
- 9: axiale Höhe
- 10: Innendurchmesser, Öffnung
- 11: Welle
- 12: Strömungsrichtung, Fahrtwind
- 13: Leitwerk (nicht belegt)
- 14: Freilauf
- 15: Zylinder-Turbine
- 16: Wand
- 17: Windfang mit -fahne
- 18: linker Kegelstumpf
- 19: rechter Kegelstumpf
- 20: Gleitkanal
- 21: Querprofil
- 22: Fahrzeug
- 23: Schaufel-Turbine
- 24: Schiff
- 25: Treibhaus
- 30: Windkraftanlage

## Patentansprüche

1. Windkraftanlage (30) zur Wandlung von durch Luft transportierter Strömungsenergie in rotatorische mechanische und/oder elektrische Energie, umfassend wenigstens ein im Wesentlichen axial angeströmtes und die Luft (12) in annähernd radialer Richtung verlassendes Turbinenrad (15), das einen drehbar gelagerten scheibenförmigen Träger (1) mit einer strömungslenkenden Strukturierung in Form von schräg und/oder gekrümmt verlaufenden Stegen (2) und/oder Kanälen aufweist, wobei die Stege (2) bzw. Kanäle jeweils über ihren Längsverlauf variable bzw. sich verändernde Querschnitte aufweisen.

2. Windkraftanlage nach Anspruch 1, deren Turbinenrad (15) eine Mehrzahl von annähernd gleichmäßig über den äußeren Bereich der stirnseitigen Oberfläche verteilten Stegen (2) aufweist, deren Oberflächen jeweils einen gekrümmten Verlauf aufweisen, deren Krümmung insbesondere dem vorgegebenen Kurvenverlauf einer Coriolisbeschleunigung entspricht.

3. Windkraftanlage nach Anspruch 1 oder 2, deren Turbinenrad (15) eine Mehrzahl von annähernd gleichmäßig über den äußeren Bereich der stirnseitigen Oberfläche verteilten Stegen (2) aufweist, deren Querschnitt jeweils eine Profilierung aufweist, wobei die Oberflächen jeweils einen gekrümmten Verlauf mit unterschiedlicher Krümmung aufweisen.

4. Windkraftanlage nach Anspruch 3, bei der jeder Steg (2) an seiner konvexen Außenseite eine stärkere Krümmung aufweist als an seiner konkaven Innenseite, so dass sich eine zu den seitlichen Enden jedes Steges (2) jeweils gegenüber dem Mittelbereich abnehmende Dicke ergibt.

5. Windkraftanlage nach einem der Ansprüche 1 bis 4, bei der die Stege des Turbinenrades (15) jeweils hypoidförmige Verläufe aufweisen.

6. Windkraftanlage nach einem der Ansprüche 1 bis 5, bei der die Stege (2) an ihren dem scheibenförmigen Träger (1) abgewandten Stirnseiten einen oder mehrere Abweiser (3, 8) in Gestalt einer ringförmigen Scheibe, einzelner repellerartiger Abweiser, strömungsleitender Scheiben o. dgl. aufweist.

7. Windkraftanlage nach einem der Ansprüche 1 bis 6, bei der dem Turbinenrad (15) an ihrem Strömungseingang eine strömungslenkende Scheibe, ein sich verjüngender oder erweiternder Trichter o. dgl. zugeordnet ist.

8. Windkraftanlage nach einem der Ansprüche 1 bis 7, bei der dem Turbinenrad (15) ein strömungslenkender Kanal (17) zugeordnet ist, der einen abschnittweise gekrümmten Verlauf aufweist.

9. Windkraftanlage nach Anspruch 8, bei der der Kanal (17) einen im Wesentlichen horizontalen Lufteinlass und einen im Wesentlichen vertikalen Luftauslass aufweist, der am Strömungseingang des horizontal angeordneten und um eine im Wesentlichen vertikal angeordnete Achse (4) rotierenden Turbinenrades (15) mündet.

10. Windkraftanlage nach Anspruch 8 oder 9, bei der der Kanal (17) im Querschnitt auf den Durchmesser des Turbinenrades (15) abgestimmt ist und eine Leiteinrichtung zur Drehung gegen die Windrichtung (12) aufweist.

11. Windkraftanlage nach einem der Ansprüche 1 bis 10, bei der das horizontal auf einem Gebäude (25) angeordnete und um eine im Wesentlichen vertikal angeordnete Achse (4) rotierende Turbinenrad (15) von unten angeströmt ist, wobei Luftkanäle warme Abluft des Gebäudes zum Turbinenrad (15) leiten.

12. Windkraftanlage nach einem der Ansprüche 1 bis 10, bei der wenigstens ein im Wesentlichen vertikal angeordnetes und um eine im Wesentlichen horizontal angeordnete Achse rotierendes Turbinenrad an einem Land-, Wasser- oder Luftfahrzeug montiert und vom Fahrtwind und/oder von Luftströmungen angeströmt ist.

13. Rotierendes, von Luft in axialer Richtung angeströmtes Turbinenrad einer Windkraftanlage gemäß einem der Ansprüche 1 bis 12.

14. Turbinenrad nach Anspruch 13, das gemäß einem der Ansprüche 1 bis 12 aufgebaut ist und von Wasser angeströmt ist, um die kinetische Energie des Wassers in mechanische Rotationsenergie und/oder in elektrische Energie zu wandeln.
